# EUROPÄISCHE PATENTSCHRIFT

(11) **EP 2 502 460 B1**
(45) Veröffentlichungstag und Bekanntmachung des Hinweises auf die Patenterteilung: **17.02.2016**
(21) Anmeldenummer: 10773021.0
(22) Anmeldetag: 20.10.2010
(51) Int. Cl.: H05B 33/08

(54) **LICHT EMITTIERENDE VORRICHTUNG**
LIGHT EMITTING DEVICE
DISPOSITIF ÉLECTROLUMINESCENT

(30) Priorität: 20.11.2009 DE 102009054067
(43) Veröffentlichungstag der Anmeldung: 26.09.2012
(73) Patentinhaber: OSRAM Opto Semiconductors GmbH, 93055 Regensburg (DE)
(72) Erfinder: KAISER, Stephan, 93049 Regensburg (DE); KUNZ, Thorsten, 93093 Donaustauf (DE); MUSCHAWECK, Julius, 82131 Gauting (DE)
(74) Vertreter: Epping - Hermann - Fischer
(86) Internationale Anmeldenummer: PCT/EP2010/065806
(87) Internationale Veröffentlichungsnummer: WO 2011/061035

(56) Entgegenhaltungen:
- EP-A1- 2 063 687
- EP-A2- 0 952 757
- US-A1- 2002 097 000
- US-A1- 2007 200 513
- US-A1- 2007 284 994
- US-A1- 2010 220 261
- US-A1- 2011 001 901

## Beschreibung

Es wird eine Licht emittierende Vorrichtung angegeben.

Die Druckschrift US 2002/0097000 A1 betrifft ein LED Beleuchtungssystem und ein Verfahren hierfür. Eine Licht emittierende Vorrichtung ist in der Druckschrift US 2007/0284994 A1 beschrieben.

Eine zu lösende Aufgabe besteht darin, eine Licht emittierende Vorrichtung anzugeben, die sowohl besonders alterungsstabil als auch kostengünstig herstellbar ist.

Erfindungsgemäß umfasst die Licht emittierende Vorrichtung zumindest eine Leuchtdiode erster Art mit einem Halbleiterkörper zur Erzeugung von elektromagnetischer Strahlung sowie ein der Leuchtdiode erster Art nachgeordnetes Konverterelement, welches zumindest einen Teil der elektromagnetischen Strahlung in Licht einer ersten Farbe konvertiert. Außerdem weist die Vorrichtung zumindest eine Leuchtdiode zweiter Art, mit einem Halbleiterkörper zur Erzeugung von Licht der ersten Farbe auf. Zusätzlich umfasst die Vorrichtung eine Strahlungsaustrittsfläche aus der das Licht der ersten Farbe austritt und eine Ansteuerschaltung zum Betreiben der Leuchtdiode zweiter Art. Das Konverterelement enthält zumindest ein Lumineszenzkonversionsmaterial, das zur Emission des Lichts der ersten Farbe vorgesehen ist. Mit wachsender Betriebsdauer der Leuchtdiode erster Art nimmt eine Intensität des vom Konverterelement emittierten Lichts der ersten Farbe ab. Die Ansteuerschaltung steuert in Abhängigkeit von zumindest einem der folgenden Messwerte die Leuchtdiode zweiter Art: Intensität des von dem Konverterelement emittierten Lichts erster Farbe, Temperatur des Konverterelements, Betriebsdauer der Leuchtdiode erster Art, Farbort des aus der Strahlungsaustrittsfläche austretenden Lichts. Ferner ist ein Detektor vorgesehen, der die Intensität und/oder den Farbort des aus der Strahlungsaustrittsfläche austretenden Lichts ermittelt und die Messwerte an die Ansteuerschaltung übermittelt, die in Abhängigkeit der Messwerte die Leuchtdiode zweiter Art steuert. Die Vorrichtung ist dadurch gekennzeichnet, dass während des Betriebs ab einer Abweichung der maximalen Intensität des von dem Konverterelement emittierten Lichts von höchstens 10 %, und/oder ab einer Abweichung von vom Detektor gemessener Farbortkoordinaten zu nach der Herstellung der Licht emittierenden Vorrichtung ermittelter Referenzfarbortkoordinaten von höchstens 10 % die Leuchtdiode zweiter Art zugeschaltet wird.

Gemäß zumindest einer Ausführungsform der Licht emittierenden Vorrichtung umfasst die Vorrichtung zumindest eine Leuchtdiode erster Art mit einem Halbleiterkörper zur Erzeugung von elektromagnetischer Strahlung. "Leuchtdiode erster Art" bedeutet in diesem Zusammenhang eine Charakterisierung der Leuchtdiode im Hinblick auf den Emissionswellenlängenbereich innerhalb des Spektrums der elektromagnetischen Strahlung, der von der Leuchtdiode emittierten elektromagnetischen Strahlung. Vorzugsweise emittiert die Leuchtdiode Licht im ultravioletten und/oder blauen Bereich des Spektrums der elektromagnetischen Strahlung.

Gemäß zumindest einer Ausführungsform der Licht emittierenden Vorrichtung ist der Leuchtdiode erster Art ein Konverterelement nachgeordnet, welches zumindest einen Teil der elektromagnetischen Strahlung in Licht einer ersten Farbe konvertiert. Das Konverterelement wandelt Licht eines Wellenlängenbereichs in Licht eines anderen Wellenlängenbereichs um. Beispielsweise wandelt das Konverterelement von der von der Leuchtdiode erster Art primär emittiertes blaues Licht zumindest teilweise in grünes Licht um.

Gemäß zumindest einer Ausführungsform der Licht emittierenden Vorrichtung umfasst diese zumindest eine Leuchtdiode zweiter Art, mit einem Halbleiterkörper zur Erzeugung von Licht der ersten Farbe. Mit anderen Worten emittieren sowohl die Leuchtdiode zweiter Art als auch das Konverterelement Licht gleicher Farbe. Das Licht des Konverterelements und der Leuchtdiode zweiter Art wird als Licht gleicher Farbe bezeichnet, wenn dem Betrachter die Farben gleich erscheinen.

Gemäß zumindest einer Ausführungsform umfasst die Licht emittierende Vorrichtung eine Strahlungsaustrittsfläche, aus der das Licht der ersten Farbe austritt. Dabei tritt sowohl das vom Konverterelement emittierte Licht der ersten Farbe als auch das von der Leuchtdiode zweiter Art emittierte Licht der ersten Farbe aus der Strahlungsaustrittsfläche aus.

Gemäß zumindest einer Ausführungsform der Licht emittierenden Vorrichtung umfasst diese eine Ansteuerschaltung zum Betreiben der Leuchtdiode zweiter Art. "Betreiben" heißt in diesem Zusammenhang, dass die Ansteuerschaltung beispielsweise die Bestromungshöhe, Bestromungsdauer und/oder die Spannung für die Leuchtdiode zweiter Art regelt und festlegt. Ferner ist es möglich, dass die Ansteuerschaltung zusätzlich die Leuchtdiode erster Art betreibt.

Gemäß zumindest einer Ausführungsform der Licht emittierenden Vorrichtung enthält das Konverterelement zumindest ein Lumineszenzkonversionsmaterial, das zur Emission des Lichts der ersten Farbe vorgesehen ist. Denkbar ist auch, dass das Konverterelement weitere Lumineszenzkonversionsmaterialien enthält, die Licht weiterer Farben emittieren. Beispielsweise ist das Lumineszenzkonversionsmaterial ein Phosphor, der grünes Licht emittiert.

Gemäß zumindest einer Ausführungsform nimmt mit wachsender Betriebsdauer der Leuchtdiode erster Art eine Intensität des vom Konverterelement emittierten Lichts der ersten Farbe ab. Im Wesentlichen liegt dies darin begründet, dass das im Konverterelement enthaltene Lumineszenzkonversionsmaterial dazu neigt, bereits nach kurzer Betriebsdauer und/oder nach kurzzeitiger Einstrahlung von elektromagnetischer Strahlung zu altern. Aufgrund der geringen Alterungsstabilität des Lumineszenzkonversionsmaterials emittiert das Konverterelement mit wachsender Betriebsdauer weniger Licht der ersten Farbe, wodurch die Intensität des vom Konverterelement emittierten Lichts der ersten Farbe abnimmt. Mit anderen Worten zeigt das Konverterelement aufgrund der Alterungserscheinungen das im Konverterelement enthaltene Lumineszenzkonversionsmaterial keine stabile Farbkonversion.

Gemäß zumindest einer Ausführungsform der Licht emittierenden Vorrichtung steuert die Ansteuerschaltung in Abhängigkeit von zumindest einem der vorliegenden Messwerte die Leuchtdiode zweiter Art: Intensität des vom Konverterelement emittierten Lichts erster Farbe, Temperatur des Konverterelements, Betriebsdauer der Leuchtdiode erster Art, Farbort des aus der Strahlungsaustrittsfläche austretenden Lichts.

Gemäß zumindest einer Ausführungsform der Licht emittierenden Vorrichtung umfasst diese zumindest eine Leuchtdiode erster Art mit einem Halbleiterkörper zur Erzeugung von elektromagnetischer Strahlung und ein der Leuchtdiode erster Art nachgeordnetes Konverterelement, welches zumindest einen Teil der elektromagnetischen Strahlung in Licht einer ersten Farbe konvertiert. Ferner umfasst die Licht emittierende Vorrichtung zumindest eine Leuchtdiode zweiter Art, mit einem Halbleiterkörper zur Erzeugung von Licht der ersten Farbe, wobei aus einer Strahlungsaustrittsfläche Licht der ersten Farbe austritt. Weiter umfasst die Licht emittierende Vorrichtung eine Ansteuerschaltung zum Betreiben der Leuchtdiode zweiter Art. Das Konverterelement enthält zumindest ein Lumineszenzkonversionsmaterial, das zur Emission des Lichts der ersten Farbe vorgesehen ist, wobei mit wachsender Betriebsdauer der Leuchtdiode erster Art eine Intensität des vom Konverterelement emittierten Lichts der ersten Farbe abnimmt. Eine Ansteuerschaltung steuert in Abhängigkeit von den Messwerten Intensität des von dem Konverterelement emittierten Lichts erster Farbe, Temperatur des Konverterelements, Betriebsdauer der Leuchtdiode erster Art, Farbort des aus der Strahlungsaustrittsfläche austretenden Lichts, die Leuchtdiode zweiter Art.

Die hier beschriebene Licht emittierende Vorrichtung beruht dabei unter anderem auf der Erkenntnis, dass ein in einem Konverterelement enthaltenes Lumineszenzkonversionsmaterial bereits nach kurzer Betriebsdauer dazu neigt, Alterungserscheinungen zu zeigen. Das Alterungsverhalten liegt zumeist in hohen Betriebstemperaturen, Feuchteeinwirkungen oder in der Bestrahlung mit elektromagnetischer Strahlung begründet. Die von einer Leuchtdiode erster Art erzeugte elektromagnetische Strahlung wird von dem der Leuchtdiode erster Art nachgeordneten Konverterelement zumindest teilweise in Licht der ersten Farbe konvertiert. Da das Konverterelement bereits nach kurzer Betriebsdauer - im Vergleich zur Lebensdauer der Leuchtdiode erster Art -, also nach kurzzeitiger Einstrahlung von elektromagnetischer Strahlung, Alterungserscheinungen zeigt, emittiert das Konverterelement weniger konvertiertes Licht. Das heißt, dass die Intensität des konvertierten Lichts abnimmt. Mischt sich beispielsweise das vom Konverterelement emittierte Licht mit dem Licht der ersten Leuchtdiode, so weist eine Strahlungsaustrittsfläche, durch welche das Licht austritt, in Abhängigkeit der Betriebsdauer einen unterschiedlichen Farbton auf. Mit anderen Worten verschiebt sich in Abhängigkeit der Betriebsdauer der Farbort an der Strahlungsauskoppelfläche.

Um nun solchen Farbortverschiebungen entgegenwirken zu können und gleichzeitig eine kostengünstige Licht emittierende Vorrichtung bereitzustellen, macht die hier beschriebene Licht emittierende Vorrichtung unter anderem von der Idee Gebrauch, zumindest eine Leuchtdiode zweiter Art, mit einem Halbleiterkörper zur Erzeugung von Licht einer ersten Farbe bereitzustellen, wobei eine Ansteuerschaltung zum Betreiben der Leuchtdiode zweiter Art dient und in Abhängigkeit von Messwerten die Leuchtdiode zweiter Art steuert.

Mittels der Ansteuerschaltung werden die Leuchtdioden zweiter Art nachgesteuert, wodurch der Farbverlust verursacht durch die Alterungsinstabilität des Lumineszenzkonversiönsmaterials kompensiert wird. Beispielsweise werden die Leuchtdioden zweiter Art mit wachsender Betriebsdauer stärker bestromt, wodurch die Leuchtdiode zweiter Art den verlorenen Intensitäts- und Farbanteil, der durch die Alterung des Lumineszenzkonversionsmaterials im Konversionselement hervorgerufen wird, ersetzt. Das heißt, dass mittels der Nachsteuerung der Leuchtdiode zweiter Art die Intensität, der Farbort und/oder die Helligkeit an der Strahlungsaustrittsfläche möglichst konstant bleiben. In der einfachsten Ausführungsform werden die Leuchtdioden zweiter Art nach einer vorgegebenen Gesamt-Betriebsdauer der Licht emittierenden Vorrichtung zugeschaltet. Als vorgegebene Gesamt-Betriebsdauer wird eine Betriebsdauer gewählt, ab der erfahrungsgemäß die Intensität des konvertierten Lichts soweit abgenommen hat, dass eine Verstärkung durch die Leuchtdiode zweiter Art notwendig ist. Beispielsweise ist eine solche Licht emittierende Vorrichtung besonders gut als Hintergrundbeleuchtung für Fernseher oder Displays geeignet.

Gemäß zumindest einer Ausführungsform der Licht emittierenden Vorrichtung erhöht oder verringert die Ansteuerschaltung die Intensität des von der Leuchtdiode zweiter Art emittierten Lichts erster Farbe in Abhängigkeit von zumindest einem der genannten Messwerte. Denkbar ist auch, dass die Ansteuerschaltung in Abhängigkeit mehrerer oder aller genannter Messwerte die Intensität erhöht oder verringert. Vorteilhaft kann so erreicht werden, dass in Abhängigkeit der Betriebsdauer die Leuchtdioden zweiter Art mittels der Ansteuerschaltung besonders genau nachgesteuert werden.

Gemäß zumindest einer Ausführungsform der Licht emittierenden Vorrichtung ist ein Detektor vorgesehen, der die Intensität und/oder den Farbort des aus der Strahlungsaustrittsfläche austretenden Lichts ermittelt und die Messwerte an die Ansteuerschaltung übermittelt, die in Abhängigkeit der Messwerte die Leuchtdiode zweiter Art steuert. Beispielsweise detektiert der Detektor die Intensität der ersten Farbe des aus der Strahlungsaustrittsfläche austretenden Lichts. Nach der Detektion übermittelt der Detektor einen der Intensität entsprechenden Wert an die Ansteuerschaltung, woraufhin die Ansteuerschaltung die Leuchtdiode zweiter Art zuschaltet, um zum Beispiel einen Intensitätsausfall zu kompensieren.

Gemäß zumindest einer Ausführungsform der Licht emittierenden Vorrichtung ist ein Temperatursensor vorgesehen, der die Temperatur des Konverterelements misst und die Messwerte an die Ansteuerschaltung übermittelt, die in Abhängigkeit der Messwerte die Leuchtdiode zweiter Art steuert. Da insbesondere das im Konverterelement enthaltene Lumineszenzkonversionsmaterial mit wachsender Betriebstemperatur dazu neigt, elektromagnetische Strahlung weniger effizient zu konvertieren und/oder bei unterschiedlichen Betriebstemperaturen Licht unterschiedlicher Farborte zu emittieren, ermöglicht vorteilhaft der Temperatursensor eine Ermittlung der Betriebstemperatur des Konverterelements, wodurch mittels der Ansteuerschaltung die Leuchtdiode zweiter Art "temperaturabhängig" zugeschaltet werden kann. Das kann heißen, dass durch die Ansteuerschaltung die Leuchtdiode zweiter Art mit wachsender Temperatur des Konverterelements stärker bestromt wird, während zur Kompensation der zunehmenden Temperaturerwärmung des Konverterelements die Leuchtdiode erster Art "gedimmt" wird.

Gemäß zumindest einer Ausführungsform der Licht emittierenden Vorrichtung wird während des Betriebs ab einer Abweichung der maximalen Intensität des vom Konverterelement emittierten Lichts von höchstens 10 % die Leuchtdiode zweiter Art zugeschaltet. Mit anderen Worten weicht die Helligkeit für einen externen Betrachter entlang der Strahlungsaustrittfläche während des Betriebs um maximal 10 % von einer maximalen Helligkeit ab.

Gemäß zumindest einer Ausführungsform der Licht emittierenden Vorrichtung wird während des Betriebs ab einer Abweichung von vom Detektor gemessener Farbortkoordinaten zu, nach der Herstellung der Licht emittierenden Vorrichtung ermittelter, Referenzfarbortkoordinaten von höchstens 10 %, bevorzugt von höchstens 5 %, die Leuchtdiode zweiter Art zugeschaltet. Beispielsweise werden die Leuchtdioden zweiter Art in Abhängigkeit der Abweichung unterschiedlich bestromt. "Farbortkoordinaten" sind vorliegend festgelegt durch die X-Koordinate Cₓ und die Y-Koordinate C_{y} des Farbortkoordinatensystems im Normvalenzsystem CIE.

Gemäß zumindest einer Ausführungsform der Licht emittierenden Vorrichtung wird die von der Leuchtdiode erster Art emittierte Strahlung und das vom Konverterelement emittierte Licht in einem ersten Lichtleiter und das Licht der Leuchtdiode zweiter Art in einen zweiten Lichtleiter eingekoppelt. Erster und zweiter Lichtleiter sind also getrennt voneinander. Beispielsweise sind erster und zweiter Lichtleiter aufeinander gestapelt und stehen in direktem Kontakt miteinander, sodass sich zwischen erstem und zweitem Lichtleiter weder ein Spalt noch eine Unterbrechung ausbildet. Durch die Einkopplung des Lichts der ersten Farbe der Leuchtdiode zweiter Art in einen vom ersten Lichtleiter separaten zweiten Lichtleiter vermischt das Licht sich innerhalb des zweiten Lichtleiters zunächst besonders gleichmäßig. Erst nach der Lichtmischung in den beiden Lichtleitern koppelt das Licht jeweils wieder aus den beiden Lichtleitern in einer Lichtaustrittsrichtung aus. Das aus dem ersten Lichtleiter ausgekoppelte Licht kann sich dann mit dem aus dem zweiten Lichtleiter ausgekoppelten Licht zumindest teilweise an der Strahlungsaustrittsfläche mischen, um dort aus der Licht emittierenden Vorrichtung ausgekoppelt zu werden. Bei dieser Ausführungsform kann die Strahlungsauskoppelfläche durch eine dem ersten Lichtleiter abgewandte Außenfläche des zweiten Lichtleiters gebildet sein.

Gemäß zumindest einer Ausführungsform der Licht emittierenden Vorrichtung ist der erste Lichtleiter zumindest doppelt so dick in einer vertikalen Richtung wie der zweite Lichtleiter. "Vertikal" bedeutet hierbei, eine Richtung senkrecht zu einer Haupterstreckungsrichtung des ersten und des zweiten Lichtleiters. Vorzugsweise weist der erste Lichtleiter eine Dicke von 2 bis 6 mm und der zweite Lichtleiter eine Dicke von 0,5 bis 1 mm auf. Vorteilhaft ist durch eine derart geringe Dicke, insbesondere des zweiten Lichtleiters, die Licht emittierende Vorrichtung für einen externen Betrachter besonders flach. Ferner sind durch die geringen Dicken der beiden Lichtleiter die Materialkosten der Lichtleiter besonders gering.

Gemäß zumindest einer Ausführungsform der Licht emittierenden Vorrichtung sind der erste und der zweite Lichtleiter beabstandet zueinander angeordnet, wobei zwischen dem ersten und dem zweiten Lichtleiter eine strahlungsdurchlässige Schicht angeordnet ist. "Strahlungsdurchlässig" bedeutet, dass die Schicht für elektromagnetische Strahlung zumindest zu 80 %, bevorzugt zumindest zu 90 % durchlässig ist. Beispielsweise handelt es sich bei der strahlungsdurchlässigen Schicht um eine Schicht, die mit einem Silikon gebildet ist. Vorzugsweise grenzt die strahlungsdurchlässige Schicht an einander zugewandte Außenflächen des ersten und zweiten Lichtleiters direkt an. Vorzugsweise weist die strahlungsdurchlässige Schicht einen Brechungsindex auf, der zwischen dem Brechungsindex des ersten und des zweiten Lichtleiters liegt. Durch die Brechungsindexanpässung der strahlungsdurchlässigen Schicht wird ein möglichst hoher Lichtanteil aus dem ersten und dem zweiten Lichtleiter ausgekoppelt, wodurch störende Rück- und/oder Totalreflexion in die Lichtleiter verringert werden.

Gemäß zumindest einer Ausführungsform der Licht emittierenden Vorrichtung werden die von der Leuchtdiode erster Art emittierte Strahlung, das vom Konverterelement emittierte Licht und das Licht der Leuchtdiode zweiter Art in einen einzigen Lichtleiter eingekoppelt. Das heißt, dass die Licht emittierende Vorrichtung genau einen Lichtleiter umfasst, in den eingekoppelt wird. Vorteilhaft kann sich das gesamte innerhalb der Licht emittierenden Vorrichtung erzeugte Licht in dem einzigen Lichtleiter vermischen, sodass das aus dem Lichtleiter ausgekoppelte Licht an der Strahlungsaustrittsfläche für einen externen Betrachter einen ganz besonders homogenen Farbeindruck erzeugt.

Gemäß zumindest einer Ausführungsform der Licht emittierenden Vorrichtung ist die Leuchtdiode zweiter Art an einer Seitenfläche des Lichtleiters angeordnet. Durch die Seitenflächen ist der Lichtleiter seitlich begrenzt. Beispielsweise verlaufen die Seitenflächen quer oder senkrecht zur Haupterstreckungsebene des Lichtleiters. Dadurch, dass die Leuchtdiode zweiter Art an der Seitenfläche angeordnet ist, kann das von der Leuchtdiode zweiter Art emittierte Licht über die Seitenflächen in den Lichtleiter einkoppeln. Beispielsweise ist auch die Leuchtdiode erster Art an einer Seitenfläche des Lichtleiters angeordnet. Die "seitliche" Anordnung ermöglicht vorteilhaft eine ganz besonders flache Vorrichtung, das heißt eine Vorrichtung mit einer besonders geringen Dicke.

Gemäß zumindest einer Ausführungsform ist die Leuchtdiode zweiter Art im Bereich einer Ecke des Lichtleiters angeordnet. Vorteilhaft kann das von der Leuchtdiode zweiter Art in den Lichtleiter über die Ecke eingekoppelte Licht sich besonders gleichmäßig, beispielsweise fächerartig von der Ecke aus, im Lichtleiter ausbreiten und mit dem von der Leuchtdiode erster Art in den Lichtleiter eingekoppelten Licht mischen. Umfasst die Licht emittierende Vorrichtung mehrere Leuchtdioden zweiter Art, so sind vorzugsweise alle Ecken des Lichtleiters mit diesen belegt. Für den Fall, dass der Lichtleiter zum Beispiel vier Ecken aufweist, ist jede der vier Ecken mit zumindest einer Leuchtdiode zweiter Art belegt. Die Licht emittierende Vorrichtung weist dann zumindest vier Leuchtdioden zweiter Art auf.

Denkbar ist in diesem Zusammenhang, dass ein optisches Element, beispielsweise eine Linse, zwischen der Leuchtdiode zweiter Art und dem Lichtleiter angeordnet ist. Beispielsweise ist das optische Element dann auf die Leuchtdiode zweiter Art aufgebracht. Vorzugsweise erzeugt das optische Element einen größeren Abstrahlkegel der Leuchtdiode zweiter Art, wodurch in den Lichtleiter bereits großflächiger eingekoppelt wird.

Gemäß zumindest einer Ausführungsform der Licht emittierenden Vorrichtung umfasst diese zumindest ein weiteres im Konverterelement enthaltendes Lumineszenzkonversionsmaterial, welches zumindest einen Teil der Strahlung in Licht einer weiteren Farbe konvertiert. Beispielsweise handelt es sich bei dem Licht der weiteren Farbe um rotes Licht. Mit anderen Worten kann dann von der Leuchtdiode erster Art emittiertes blaues Licht in dem Konverterelement teilweise in rotes und grünes Licht konvertiert werden, das sich dann zusammen mit dem von der Leuchtdiode erster Art emittierten blauen Licht zu weißem Licht mischen kann. Ferner ist denkbar, dass das Konverterelement noch weitere Lumineszenzkonversionsmaterialien enthält, das die von der Leuchtdiode erster Art emittierte elektromagnetische Strahlung teilweise in weitere Farben konvertiert.

Ferner umfasst die Licht emittierende Vorrichtung zumindest eine Leuchtdiode einer weiteren Art mit einem Halbleiterkörper zur Erzeugung von Licht der weiteren Farbe. Handelt sich bei dem Licht der weiteren Farbe um rotes Licht, so emittiert vorzugsweise auch die Leuchtdiode der weiteren Art rotes Licht. Ebenso kann die Licht emittierende Vorrichtung Leuchtdioden zusätzlicher weiterer Arten zur Erzeugung unterschiedlicher Farben aufweisen.

Mit wachsender Betriebsdauer der Leuchtdiode erster Art nimmt eine Intensität der vom Konverterelement zu Licht der weiteren Farbe konvertierten Strahlung ab.

Zudem betreibt die Ansteuerschaltung zusätzlich die zumindest eine Leuchtdiode der weiteren Art und steuert diese in Abhängigkeit der genannten Messwerte.

Im Folgenden wird die hier beschriebene Licht emittierende Vorrichtung anhand von Ausführungsbeispielen und den dazugehörigen Figuren näher erläutert.

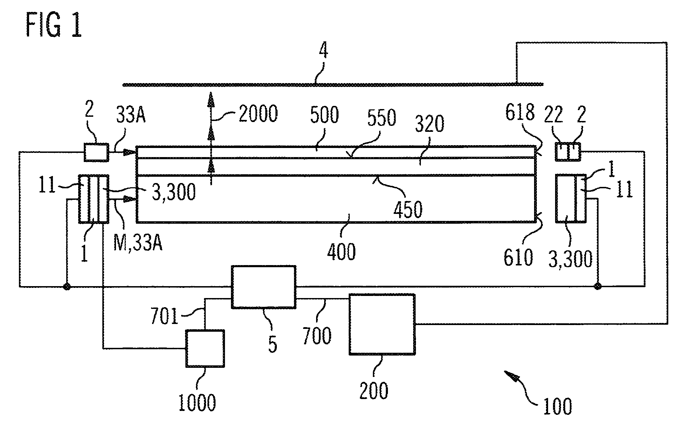

Die Figuren 1 bis 3 zeigen in schematischen Ansichten Ausführungsbeispiele einer hier beschriebenen Licht emittierenden Vorrichtung.

In den Ausführungsbeispielen und den Figuren sind gleiche oder gleich wirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

In der Figur 1 ist anhand einer schematischen Seitenansicht eine hier beschriebene Licht emittierende Vorrichtung 100 aufweisend einen ersten Lichtleiter 400 und einen zweiten Lichtleiter 500 dargestellt. Beispielsweise sind die beiden Lichtleiter mit Polymethylmethacrylat (auch PMMA) oder einem Glas gebildet. Ferner kann der zweite Lichtleiter 500 mit einem Material gebildet sein, welches Licht einer ersten Farbe 33A, beispielsweise grünes Licht, besonders gut leitet. Seitlich, das heißt im Bereich von Seitenflächen 610 und 618 des ersten 400 und des zweiten Lichtleiters 500, sind Leuchtdioden erster Art 1 und Leuchtdioden zweiter Art 2 angeordnet. Auf die Leuchtdioden erster Art 1 ist ein Konverterelement 3 zur Konversion der von den Leuchtdioden erster Art 1 emittierten elektromagnetischen Strahlung aufgebracht. Das Konverterelement 3 konvertiert teilweise die von der Leuchtdiode erster Art 1 emittierte elektromagnetische Strahlung in Licht einer anderen Wellenlänge. Vorliegend handelt es sich bei der Leuchtdiode erster Art 1 um eine Leuchtdiode, mit einem Halbleiterkörper 11 zur Erzeugung von blauem Licht. Aufgrund eines im Konverterelement 3 enthaltenen Lumineszenzkonversionsmaterials 300 wird das von der Leuchtdiode erster Art 1 in das Konverterelement 3 eingekoppelte blaue Licht teilweise in grünes Licht konvertiert. Grünes und blaues Licht mischen sich dann zu weißem Licht und ergeben das Mischlicht M. Über die Seitenflächen 610 des ersten Lichtleiters 400 koppelt anschließend das Mischlicht M in den ersten Lichtleiter 400 ein und verteilt sich in diesem vorzugsweise gleichmäßig.

Bei den Leuchtdioden zweiter Art 2 handelt es sich um Leuchtdioden, mit einem Halbleiterkörper 22 zur Erzeugung von Licht der ersten Farbe 33A. Vorliegend ist das Licht der ersten Farbe 33A grünes Licht. Das von den Leuchtdioden zweiter Art 2 emittierte Licht der ersten Farbe 33A koppelt über Seitenflächen 618 des zweiten Lichtleiters 500 in den zweiten Lichtleiter 500 ein. Zwischen einer Außenfläche 450 des ersten Lichtleiters 400 und einer Außenfläche 550 des zweiten Lichtleiters 500 ist eine strahlungsdurchlässige Schicht 320 angeordnet, die beispielsweise mit einem Silikon gebildet ist. Der erste Lichtleiter 400 und der zweite Lichtleiter 500 sind über die strahlungsdurchlässige Schicht 320 miteinander verbunden. Nach der Einkopplung des Lichts in die Lichtleiter 400 und 500 wird das Licht aus den beiden Lichtleitern 400 und 500 in eine Lichtaustrittsrichtung 2000 ausgekoppelt. An einer Strahlungsaustrittsfläche 4 überlagern sich sowohl das aus dem ersten Lichtleiter 400 ausgekoppelte Mischlicht M und das aus dem zweiten Lichtleiter 500 ausgekoppelte Licht der ersten Farbe 33A beispielsweise zu weißem Licht.

Ferner umfasst die Licht emittierende Vorrichtung 100 eine Ansteuerschaltung 5 zum Betreiben der Leuchtdioden erster 1 und zweiter Art 2. Weiter weist die Licht emittierende Vorrichtung 100 einen Temperatursensor 1000 und einen Detektor 200 auf. Der Temperatursensor 1000 misst die Temperatur des Konverterelements 3 und übermittelt den Messwerten entsprechende Werte 701 an die Ansteuereinheit. Der Detektor 200 misst an der Strahlungsaustrittsfläche 4 sowohl die Intensität als auch den Farbort des aus der Strahlungsaustrittsfläche 4 austretenden Lichts, wobei der Detektor 200 den Messwerten entsprechende Werte 700 an die Ansteuerschaltung 5 übermittelt. Die Ansteuerschaltung steuert daher die Leuchtdioden erster 1 und zweiter Art 2 in Abhängigkeit der Intensität des vom Konverterelement 3 emittierten Lichts erster Farbe 33A, der Temperatur des Konverterelements 3, der Betriebsdauer der Leuchtdiode erster Art 1, des Farborts des aus der Strahlungsaustrittfläche 4 austretenden Lichts. In einer Abwandlung ist denkbar, dass die Ansteuerschaltung die Leuchtdioden erster 1 und/oder zweiter Art 2 in Abhängigkeit von nur einem Messwert, beispielweise der Betriebsdauer der Leuchtdioden zweiter Art 2, steuert. Der Detektor 200 und der Temperatursensor 1000 sind dann nicht erforderlich. Beispielsweise umfasst dann die Licht emittierende Vorrichtung lediglich einen Betriebsstundenzähler, der entsprechende Zeit-Werte an die Ansteuerschaltung 5 übermittelt.

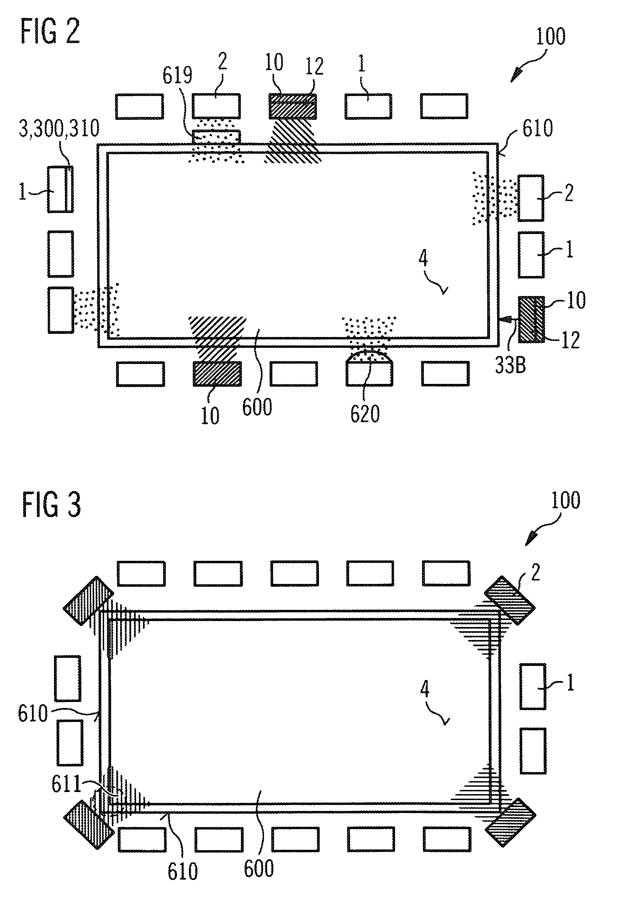

Die Figur 2 zeigt in einer schematischen Draufsicht eine Licht emittierende Vorrichtung 100 mit einem einzigen Lichtleiter 600. Beispielsweise ist der Lichtleiter 600 mit Polymethylmethacrylat oder einem Glas gebildet. Ebenso ist es möglich, dass der Lichtleiter 600 mit zwei sich gegenüberliegenden Folien gebildet ist, zwischen denen sich Luft als Ausbreitungsmedium für das Licht befindet (auch Airguide). Eine der Folien kann dann reflektierend ausgebildet sein, wobei über die jeweils andere teilreflektierende und/oder teilabsorbierende Folie, welche die Strahlungsaustrittsfläche 4 der Licht emittierenden Vorrichtung 100 bildet, das Licht aus dem Lichtleiter 600 ausgekoppelt wird. Mit anderen Worten liegen sich dann die reflektierende Folie und die Strahlungsaustrittsfläche 4 gegenüber.

Sowohl die Leuchtdioden erster Art 1 als auch die Leuchtdioden zweiter Art 2 sind entlang der Seitenflächen 610 angeordnet. Ferner sind Leuchtdioden einer weiteren Art 10 entlang der Seitenflächen 610 angeordnet, die einen Halbleiterkörper 12 zur Erzeugung von Licht einer weiteren Farbe 33B, vorliegend rotem Licht, aufweisen. Denkbar ist, dass die Leuchtdioden 1, 2 und 10 entlang der Seitenflächen 610 in einem vorgebbaren Muster, beispielsweise periodisch sich gegenseitig ablösend oder gruppenartig, angeordnet sind. Ferner weist das Konverterelement 3 neben dem hier beschriebenen Lumineszenzkonversionsmaterial 300 zusätzlich ein Lumineszenzkonversionsmaterial 310 auf. Das Lumineszenzkonversionsmaterial 310 wandelt die von den Leuchtdioden erster Art 1 emittierte elektromagnetische Strahlung, vorliegend blaues Licht, teilweise in Licht der weiteren Farbe 33B, beispielsweise rotes Licht, um. Alle drei Lichtfarben, also blau, rot und grün können sich dann zu weißem Licht Mischlicht M mischen. Sowohl das emittierte Mischlicht M als auch das Licht der ersten Farbe 33A und das Licht der zweiten Farbe 33B koppeln daher in einen einzigen Lichtleiter 600 ein und vermischen sich innerhalb des Lichtleiters 600 wiederum möglichst homogen.

Denkbar ist, dass der Lichtleiter selbst Lichteinkoppelstrukturen 619 aufweist. Beispielsweise sind die Seitenflächen 610 dann in Form solcher Lichteinkoppelstrukturen 619 ausgebildet. Die Lichteinkoppelstrukturen 619 können dann Aufrauungen umfassen oder linsenförmig ausgebildet sein. Zudem können solche Lichteinkoppelstrukturen 619 beispielsweise auf die Seitenflächen 610 aufgebracht sein. Die Einkoppelstrukturen 619 können eine Einkoppeleffizienz des von den Leuchtdioden und den Konverterelementen 3 emittierten Lichts signifikant steigern. "Einkoppeleffizienz" bedeutet in diesem Zusammenhang, das Verhältnis von tatsächlich in den Lichtleiter 600 eingekoppelter Strahlung zu auf den Lichtleiter 600 auftreffender Strahlung. Denkbar ist auch, dass die Einkoppelstrukturen 619 nur die Einkoppeleffizienz des Lichts der Leuchtdioden zweiter Art 2 und/oder der Leuchtdioden der weiteren Art 10 in den Lichtleiter 600 steigern. Die Einkoppelstrukturen 619 sind dann wellenlängenselektiv und/oder auf den Emissionswellenlängenbereich der Leuchtdioden 2 und 10 abgestimmt.

Alternativ oder zusätzlich kann zwischen einer oder mehrerer der Leuchtdioden zweiter Art 2 und/oder der Leuchtdioden der weiteren Art 10 und dem Lichtleiter 600 ein optisches Element 620 angeordnet sein. Mittels des optischen Elements 620 kann vorteilhaft ein größerer Abstrahlkegel der Leuchtdiode zweiter Art 2 und/oder der Leuchtdiode der weiteren Art 10 erzeugt werden. Beispielsweise ist das optische Element 620 eine Lichtaufweitungslinse, die auf die Leuchtdioden zweiter Art 2 und/oder der Leuchtdioden der weiteren Art 10 jeweils aufgebracht ist. Durch die Lichtaufweitungslinse 620 kann das von den Leuchtdioden emittierte Licht großflächig, beispielsweise über die sich auf den Seitenflächen 600 befindlichen Einkoppelstrukturen 619, in den Lichtleiter 600 einkoppeln.

Vorteilhaft kann aufgrund der verbesserten Einkoppeleffizienz die Zahl der Leuchtdioden zweiter 2 und/oder der weiteren Art 10 möglichst gering gehalten werden, wodurch sich erhebliche Kosteneinsparungen zur Herstellung der Licht emittierenden Vorrichtung 100 ergeben.

Die Figur 3 zeigt im Unterschied zum Ausführungsbeispiel der Figur 2, dass die Leuchtdioden zweiter Art 2 nur an Ecken 611 angeordnet sind, wobei sich die Leuchtdioden erster Art 1 an den Seitenflächen 610 befinden. Vorteilhaft wird so ein möglichst großer Anteil des von den Leuchtdioden zweiter Art 2 erzeugten Lichts in den Lichtleiter 600 eingekoppelt und kann sich beispielsweise fächerartig von den Ecken 611 aus in dem Lichtleiter 600 ausbreiten. In einer Draufsicht auf den Lichtleiter 600 ist dieser rechteckförmig. Das heißt, dass die Licht emittierende Vorrichtung 100 zumindest vier Leuchtdioden zweiter Art 2 umfasst, die nur an den Ecken 611 platziert sind. Vorteilhaft wird über die "Eckeinkopplung" des Lichts der zweiten Leuchtdioden 2 eine geringere Zahl an Leuchtdioden zweiter Art 2 benötigt, was sich beispielsweise als besonders kostengünstig erweist.

In diesem Zusammenhang sei darauf hingewiesen, dass alternativ die Leuchtdioden zweiter Art 2 neben der Anordnung an den Ecken 611 zusätzlich auch entlang der Seitenflächen 610 des Lichtleiters 600 angebracht sein können.

## Patentansprüche

1. Licht emittierende Vorrichtung (100),
umfassend
- zumindest eine Leuchtdiode erster Art (1) mit einem Halbleiterkörper (11) zur Erzeugung von elektromagnetischer Strahlung;
- ein der Leuchtdiode erster Art (1) nachgeordnetes Konverterelement (3), welches zumindest einen Teil der elektromagnetischen Strahlung in Licht einer ersten Farbe (33A) konvertiert;
- zumindest eine Leuchtdiode zweiter Art (2), mit einem Halbleiterkörper (22) zur Erzeugung von Licht der ersten Farbe (33A);
- eine Strahlungsaustrittsfläche (4) aus der das Licht der ersten Farbe (33A) austritt;
- eine Ansteuerschaltung (5) zum Betreiben der Leuchtdiode zweiter Art (2), wobei
- das Konverterelement (3) zumindest ein Lumineszenzkonversionsmaterial (300) enthält, das zur Emission des Lichts der ersten Farbe (33A) vorgesehen ist,
- mit wachsender Betriebsdauer der Leuchtdiode erster Art (1) eine Intensität des vom Konverterelement (3) emittierten Lichts der ersten Farbe (33A) abnimmt,
- die Ansteuerschaltung (5) in Abhängigkeit von zumindest einem der folgenden Messwerte (700, 701) die Leuchtdiode zweiter Art (2) steuert: Intensität des von dem Konverterelement (3) emittierten Lichts erster Farbe (33A), Temperatur des Konverterelements (3), Betriebsdauer der Leuchtdiode erster Art (1), Farbort des aus der Strahlungsaustrittsfläche (4) austretenden Lichts,
- ein Detektor (200) vorgesehen ist, der die Intensität und/oder den Farbort des aus der Strahlungsaustrittsfläche (4) austretenden Lichts ermittelt und die Messwerte (700) an die Ansteuerschaltung (5) übermittelt, die in Abhängigkeit der Messwerte (700) die Leuchtdiode zweiter Art (2) steuert, **dadurch gekennzeichnet dass**
- während des Betriebs ab einer Abweichung der maximalen Intensität des von dem Konverterelement (3) emittierten Lichts von höchstens 10 %, und/oder
ab einer Abweichung von vom Detektor (200) gemessener Farbortkoordinaten zu nach der Herstellung der Licht emittierenden Vorrichtung ermittelter Referenzfarbortkoordinaten von höchstens 10 % die Leuchtdiode zweiter Art (2) zugeschaltet wird.

2. Licht emittierende Vorrichtung (100) nach Anspruch 1,
bei der die Ansteuerschaltung (5) die Intensität des von der Leuchtdiode (2) zweiter Art emittierten Lichts erster Farbe (33A) in Abhängigkeit von zumindest einem der genannten Messwerte erhöht oder verringert.

3. Licht emittierende Vorrichtung (100) nach einem der vorhergehenden Ansprüche,
bei der ein Temperatursensor (1000) vorgesehen ist, der die Temperatur des Konverterelements (3) misst und die Messwerte (701) an die Ansteuerschaltung (5) übermittelt, die in Abhängigkeit der Messwerte (701) die Leuchtdiode zweiter Art (2) steuert.

4. Licht emittierende Vorrichtung (100) nach einem der vorhergehenden Ansprüche,
bei der die von der Leuchtdiode erster Art (1) emittierte Strahlung und das vom Konverterelement (3) emittierte Licht in einen ersten Lichtleiter (400) und das Licht der Leuchtdiode zweiter Art (2) in einen zweiten Lichtleiter (500) eingekoppelt werden.

5. Licht emittierende Vorrichtung (100) nach dem vorhergehenden Anspruch,
bei der der erste Lichtleiter (400) zumindest doppelt so dick in einer vertikalen Richtung ist wie der zweite Lichtleiter (500).

6. Licht emittierende Vorrichtung (100) nach einem der Ansprüche 4 bis 5,
bei dem der erste und der zweite Lichtleiter (400, 500) beabstandet zueinander angeordnet sind, wobei zwischen dem ersten und dem zweiten Lichtleiter eine strahlungsdurchlässige Schicht (320) angeordnet ist.

7. Licht emittierende Vorrichtung (100) nach einem der Ansprüche 1 bis 3,
bei der die von der Leuchtdiode erster Art (1) emittierte Strahlung, das vom Konverterelement (3) emittierte Licht und das Licht der Leuchtdiode zweiter Art (2) in einen einzigen Lichtleiter (600) eingekoppelt werden.

8. Licht emittierende Vorrichtung (100) nach dem vorhergehenden Anspruch,
bei der die Leuchtdiode (2) zweiter Art entlang einer Seitenfläche (610) des Lichtleiters (600) angeordnet ist.

9. Licht emittierende Vorrichtung (100) nach einem der Ansprüche 7 bis 8,
bei der die Leuchtdiode (2) zweiter Art im Bereich einer Ecke (611) des Lichtleiters (600) angeordnet sind.

10. Licht emittierende Vorrichtung (100) nach einem der vorhergehenden Ansprüche,
umfassend
- ein weiteres im Konverterelement (3) enthaltenes Lumineszenzkonversionsmaterial (310), welches zumindest einen Teil der Strahlung in Licht einer weiteren Farbe (33B) konvertiert;
- zumindest eine Leuchtdiode (10) einer weiteren Art mit einem Halbleiterkörper (12) zur Erzeugung von Licht der weiteren Farbe (33B), wobei
- mit wachsender Betriebsdauer der Leuchtdiode erster Art (1) eine Intensität der vom Konverterelement (3) zu Licht der weiteren Farbe (33B) konvertierten Strahlung abnimmt,
- die Ansteuerschaltung (5) zusätzlich die zumindest eine Leuchtdiode (10) der weiteren Art betreibt,
- die Ansteuerschaltung (5) in Abhängigkeit der genannten Messwerte die zumindest eine Leuchtdiode (10) der weiteren Art steuert.

## Claims

1. Light emitting device (100),
comprising
- at least one light emitting diode of a first type (1) having a semiconductor body (11) for generating electromagnetic radiation;
- a converter element (3) disposed downstream of the light emitting diode of the first type (1), which converter element converts at least part of the electromagnetic radiation into light of a first color (33A);
- at least one light emitting diode of a second type (2) having a semiconductor body (22) for generating light of the first color (33A);
- a radiation exit area (4), from which the light of the first color (33A) emerges;
- a drive circuit (5) for operating the light emitting diode of the second type (2), wherein
- the converter element (3) contains at least one luminescence conversion material (300) provided for emitting the light of the first color (33A),
- as the operating duration of the light emitting diode of the first type (1) increases, an intensity of the light of the first color (33A) emitted by the converter element (3) decreases,
- the drive circuit (5) controls the light emitting diode of the second type (2) in a manner dependent on at least one of the following measurement values (700, 701): intensity of the light of the first color (33A) emitted by the converter element (3), temperature of the converter element (3), operating duration of the light emitting diode of the first type (1), color locus of the light emerging from the radiation exit area (4),
- a detector (200) is provided, which determines the intensity and/or the color locus of the light emerging from the radiation exit area (4) and communicates the measurement values (700) to the drive circuit (5), which controls the light emitting diode of the second type (2) in a manner dependent on the measurement values (700), **characterized in that**
- the light emitting diode of the second type (2) is switched in during operation starting from a deviation of the maximum intensity of the light emitted by the converter element (3) of at most 10% and/or starting from a deviation of color locus coordinates measured by the detector (200) with respect to reference color locus coordinates, determined after the production of the light emitting device, of at most 10%.

2. Light emitting device (100) according to claim 1,
wherein the drive circuit (5) increases or reduces the intensity of the light of the first color (33A) emitted by the light emitting diode (2) of the second type in a manner dependent on at least one of the measurement values stated.

3. Light emitting device (100) according to either of the preceding claims,
wherein a temperature sensor (1000) is provided, which measures the temperature of the converter element (3) and communicates the measurement values (701) to the drive circuit (5), which controls the light emitting diode of the second type (2) in a manner dependent on the measurement values (701).

4. Light emitting device (100) according to any of the preceding claims,
wherein the radiation emitted by the light emitting diode of the first type (1) and the light emitted by the converter element (3) are coupled into a first optical waveguide (400) and the light from the light emitting diode of the second type (2) is coupled into a second optical waveguide (500).

5. Light emitting device (100) according to the preceding claim,
wherein the first optical waveguide (400) is at least twice as thick in a vertical direction as the second optical waveguide (500).

6. Light emitting device (100) according to either of claims 4 and 5,
wherein the first and second optical waveguides (400, 500) are arranged in a manner spaced apart from one another, wherein a radiation-transmissive layer (320) is arranged between the first and second optical waveguides.

7. Light emitting device (100) according to any of claims 1 to 3,
wherein the radiation emitted by the light emitting diode of the first type (1), the light emitted by the converter element (3) and the light from the light emitting diode of the second type (2) are coupled into a single optical waveguide (600).

8. Light emitting device (100) according to the preceding claim,
wherein the light emitting diode (2) of the second type is arranged along a side area (610) of the optical waveguide (600).

9. Light emitting device (100) according to either of claims 7 and 8,
wherein the light emitting diode (2) of the second type is arranged in the region of a corner (611) of the optical waveguide (600).

10. Light emitting device (100) according to any of the preceding claims,
comprising
- a further luminescence conversion material (310) contained in the converter element (3), which further luminescence conversion material converts at least part of the radiation into light of a further color (33B);
- at least one light emitting diode (10) of a further type having a semiconductor body (12) for generating light of the further color (33B), wherein
- as the operating duration of the light emitting diode of the first type (1) increases, an intensity of the radiation converted by the converter element (3) to form light of the further color (33B) decreases,
- the drive circuit (5) additionally operates the at least one light emitting diode (10) of the further type,
- the drive circuit (5) controls the at least one light emitting diode (10) of the further type in a manner dependent on the stated measurement values.

## Revendications

1. Dispositif électroluminescent (100), comprenant
- au moins une diode électroluminescente d'un premier type (1) avec un corps semi-conducteur (11) pour générer un rayonnement électromagnétique;
- un élément convertisseur (3) disposé après la diode électroluminescente du premier type (1), lequel convertit au moins une partie du rayonnement électromagnétique en lumière d'une première couleur (33A);
- au moins une diode électroluminescente d'un deuxième type (2) avec un corps semi-conducteur (22) pour générer de la lumière de la première couleur (33A);
- une surface de sortie de rayonnement (4) hors de laquelle sort la lumière de la première couleur (33A);
- un circuit pilote (5) pour faire fonctionner la diode électroluminescente du deuxième type (2),
- l'élément convertisseur (3) contenant au moins un matériau de conversion de luminescence (300) qui est prévu pour émettre de la lumière de la première couleur (33A),
- une intensité de la lumière de la première couleur (33A) émise par l'élément convertisseur (3) diminuant avec l'augmentation de la durée de fonctionnement de la diode électroluminescente du premier type (1),
- le circuit pilote (5) commandant la diode électroluminescente du deuxième type (2) en fonction d'au moins l'une des valeurs de mesure suivantes (700, 701) : intensité de la lumière de la première couleur (33A) émise par l'élément convertisseur (3), température de l'élément convertisseur (3), durée de fonctionnement de la diode électroluminescente du premier type (1), point de chromaticité de la lumière sortant de la surface de sortie de rayonnement (4),
- un détecteur (200) étant prévu, lequel détecte l'intensité et/ou la chromaticité de la lumière sortant de la surface de sortie de rayonnement (4) et transmet les valeurs de mesure (700) au circuit pilote (5) qui commande la diode électroluminescente du deuxième type (2) en fonction des valeurs de mesure (700), **caractérisé en ce que**
- pendant le fonctionnement, à partir d'un écart de l'intensité maximale de la lumière émise par l'élément convertisseur (3) de 10 % au maximum, et/ou à partir d'un écart de coordonnées de chromaticité mesurées par le détecteur (200) par rapport à des coordonnées de chromaticité de référence, déterminées après la fabrication du dispositif émettant de la lumière, de 10 % au maximum la diode électroluminescente du deuxième type (2) est connectée dans le circuit.

2. Dispositif électroluminescent (100) selon la revendication 1, dans lequel le circuit pilote (5) augmente ou diminue l'intensité de la lumière de la première couleur (33A) émise par la diode électroluminescente (2) du deuxième type en fonction d'au moins l'une desdites valeurs de mesure.

3. Dispositif électroluminescent (100) selon l'une quelconque des revendications précédentes, dans lequel un capteur de température (1000) est prévu, lequel mesure la température de l'élément convertisseur (3) et transmet les valeurs de mesure (701) au circuit pilote (5) qui commande la diode électroluminescente du deuxième type (2) en fonction des valeurs de mesure (701).

4. Dispositif électroluminescent (100) selon l'une quelconque des revendications précédentes, dans lequel le rayonnement émis par la diode électroluminescente du premier type (1) et la lumière émise par l'élément convertisseur (3) sont injectés dans un premier guide de lumière (400) et la lumière de la diode électroluminescente du deuxième type (2) est injectée dans un deuxième guide de lumière (500).

5. Dispositif électroluminescent (100) selon la revendication précédente, dans lequel le premier guide de lumière (400) est au moins deux fois plus épais dans la direction verticale que le deuxième guide de lumière (500).

6. Dispositif électroluminescent (100) selon l'une quelconque des revendications 4 à 5, dans laquelle le premier et le deuxième guide de lumière (400, 500) sont disposés à distance l'un de l'autre, une couche transparente au rayonnement (320) étant disposée entre le premier et le deuxième guide de lumière.

7. Dispositif électroluminescent (100) selon l'une quelconque des revendications 1 à 3, dans lequel le rayonnement émis par la diode électroluminescente du premier type (1), la lumière émise par l'élément convertisseur (3) et la lumière de la diode électroluminescente du deuxième type (2) sont injectés dans un guide de lumière unique (600).

8. Dispositif électroluminescent (100) selon la revendication précédente, dans lequel la diode électroluminescente (2) du deuxième type est disposée le long d'une surface latérale (610) du guide de lumière (600).

9. Dispositif électroluminescent (100) selon l'une quelconque des revendications 7 à 8, dans lequel la diode électroluminescente (2) du deuxième type est disposée dans la région d'un coin (611) du guide de lumière (600).

10. Dispositif électroluminescent (100) selon l'une quelconque des revendications précédentes, comprenant
- un matériau de conversion de luminescence supplémentaire (310) contenu dans l'élément convertisseur (3), qui convertit au moins une partie du rayonnement en lumière d'une autre couleur (33B);
- au moins une diode électroluminescente (10) d'un autre type avec un corps semi-conducteur (12) pour générer de la lumière de l'autre couleur (33B),
- une intensité du rayonnement converti par l'élément convertisseur (3) en lumière de l'autre couleur (33B) diminuant avec l'augmentation de la durée de fonctionnement de la diode électroluminescente du premier type (1),
- le circuit pilote (5) faisant fonctionner en outre l'au moins une diode électroluminescente (10) de l'autre type,
- le circuit pilote (5) commandant l'au moins une diode électroluminescente (10) de l'autre type en fonction des valeurs de mesure citées.
